# EUROPEAN PATENT SPECIFICATION

(11) **EP 0 399 277 B1**
(45) Date of publication and mention of the grant of the patent: **02.11.1994**
(21) Application number: 90108574.6
(22) Date of filing: 07.05.1990
(51) Int. Cl.: F16D 55/40, F16D 67/04

(54) **Hydraulic motor with clutch brake**
Hydraulischer Motor mit Kupplungsbremse
Moteur hydraulique avec frein d'embrayage

(30) Priority: 22.05.1989 IT 347489
(43) Date of publication of application: 28.11.1990
(73) Proprietor: SAM HYDRAULIK S.P.A., I-42100 Reggio Emilia (IT)
(72) Inventor: Brevini, Corrado, I-42100 S. Rigo, Reggio Emilia (IT); Brevini, Maurizio, I-42100 S. Rigo, Reggio Emilia (IT); Marani, Mauro, I-42017 Novellara, Reggio Emilia (IT)
(74) Representative: Modiano, Guido, Dr.-Ing.

(56) References cited:
- DE-A- 3 832 649
- FR-A- 2 402 121
- FR-A- 2 579 281
- GB-A- 1 464 926

## Description

The present invention relates to a hydraulic motor with clutch brake of the type as defined in the pre-characterizing part of claim 1 and as disclosed in US-A-1 464 926 and in FR-A-2 402 121.

In current hydraulic motors, the clutch brake is arranged on the output shaft of the motor itself.

This arrangement entails problems mostly regarding the bulk and installation of the motor.

The technical aim of the present invention is therefore to provide a motor of the above kind which is structurally simple and in particular has a reduced axial bulk.

Within the scope of this aim, an object of the invention is to provide a hydraulic motor which has a braking torque which is significantly greater than that of known types.

This aim is achieved by a hydraulic motor as defined in claim 1.

The features and advantages of the invention will become apparent from the following description of an embodiment, illustrated only by way of non-limitative example in the accompanying drawings, wherein:

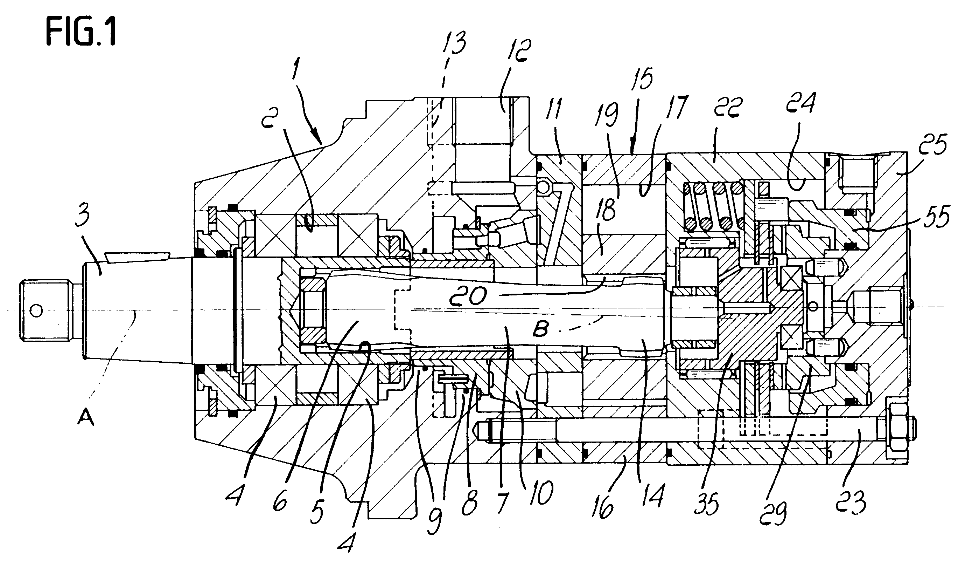

figure 1 is a longitudinal sectional view of a hydraulic motor according to the invention;

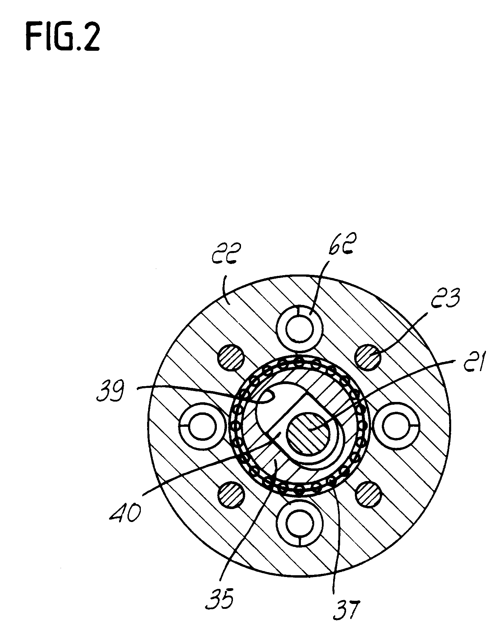

figure 2 is a transverse sectional view of the hydraulic motor of figure 1, taken along the plane II-II;
figure 3 is an enlarged-scale view of a detail of figure 1.

With reference to the above figures, the motor comprises an elongated casing 1 which is externally shaped and is internally crossed by a cavity 2 which is coaxial to the longitudinal axis A. A shaft 3 is accommodated in the front part of cavity 2, protrudes from the casing and is rotatably supported on a pair of bearings 4.

The shaft 3 has, at the end inside the cavity 2, an internal toothed seat 5 which is engaged by a toothed portion 6 of a substantially cylindrical balancer shaft 7. The balancer shaft is not coaxial to the shaft 3 but is inclined by a small angle along the axis B. In this manner, when the balancer shaft rotates as described hereafter, the axis B traces a cone the apex whereof is on the axis A.

The balancer shaft 7 traverses openings provided in some elements accommodated in the cavity 2, such as: a fixed distribution element 8 which is sealingly centered in the cavity 2 by shoulders 9, a rotating distributor 10 and a manifold 11 which is traversed by the ducts for the working fluid, in particular pressurized oil, which is fed through the delivery duct 12 and recovered through the discharge duct 13. Parts 7-11 are not described further since they are fully conventional in hydraulic motors.

On the opposite side to that of the toothed portion 6, the balancer shaft 7 has a toothed portion 14 which is adapted to couple to a volumetric element generally indicated by the reference numeral 15.

Said volumetric element is composed of a stator 16 which has an internal cavity 17 in the shape of a star, for example with seven points, and of a star-shaped rotor 18, for example with six points, accommodated and rolling inside the cavity 17. Stator 16 and rotor 18 define chambers 19 into which the pressurized oil is caused to flow through the distributor 10.

The star-shaped rotor 18 has a central toothed hole 20 rotationally engaging the toothed portion 14 of the balancer shaft 7. A cylindrical pivot 21 extends axially from the toothed portion 14 and protrudes from the volumetric element 15.

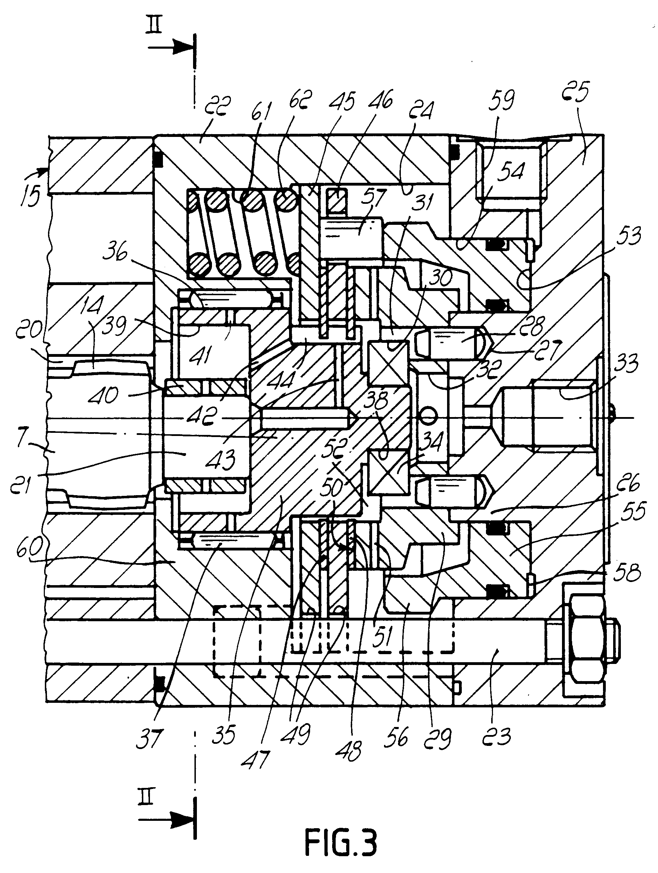

The stator is clamped between the manifold 11 and a brake shell 22 which is coupled to the casing 1 by means of a plurality of stud bolts 23. The shell 22 (see figure 3) encloses a coaxial cavity 24 which is rearwardly closed by a cover 25 which is shaped internally so as to form a cylindrical extension 26 in which two diametrical dead holes 27 are frontally provided to acommodate cylindrical dowels 28. Said cylindrical dowels 28 rotationally retain a cap 29 which is centered on the extension 26 and has a coaxial seat 30, into which there lead two holes 31 for the respective dowels 28, and a central opening 32 for discharging oil toward a duct 33 formed in the cover 25.

A ball bearing 34 is arranged in the seat 30 and rotationally supports the rear part of a traction body, generally indicated by the reference numeral 35.

The body 35 has the shape of a cup which is directed, with its larger-diameter end, toward the volumetric element 15, and is externally provided with a rolling track 36 for a roller case 37 for supporting the body 35 in the cavity 24 and a shoulder 38 for the bearing 34. A cavity 39 is provided in the face of the body 35 which is directed toward the volumetric element 15; said cavity has a diametrically elongated rectangular cross section, with rounded ends, and slidably accommodates a sliding pad 40 in which the pivot 21 of the balancer shaft 7 is inserted. Thus rotation of the balancer shaft 7 (and thus of the pivot 21) about longitudinal axis A causes a correspondent rotation of pad 40 and then of body 35 about the same axis A.

Ducts 41, 42 and 43 are provided in the body 35 and connect the cavity 39 and the cavity 24. The region comprised between the shoulder 38 and the track 36 has a series of longitudinal grooves 44 which are angularly distributed on the circumference. Two adjacent clutch disks 45 and 46 surround said region and two rings 47, 48 are arranged at both sides of the disk 46 and are provided with teeth which slidably engage the grooves 44, thus coupling the rings 47, 48 to the body 35 to rotate therewith. The disks 45, 46 have peripheral notches 49 which are traversed by the bolts 23 so as to prevent the rotation of said disks but allow their axial sliding. The ring 48 is interposed between the disk 46 and the planar front edge surface 50 of the cap 29.

Radial channels 51 are provided in the cap 29 and connect the cavity 52, internally defined by the cap 29, to the cavity 24 which is external thereto.

An annular channel-like seat 53 is provided in the cover 25, being internally delimited by the outer surface of the extension 26 and externally delimited by a wall 54.

The annular head of a piston 55 is sealingly slidable in the seat 53; said piston has a skirt 56 which embraces the cap 29 and extends toward the disk 46. Axial dowels 57 are interposed between the front edge of the skirt 56 and the disk 45, are angularly spaced and pass through the disk 46.

On the opposite side, the piston 55 has an annular chamfer; when the piston head is in contact with the bottom of the seat 53, said chamfer defines an annular chamber 58 which is constantly connected to a duct 59 which is connected to the pressurized oil feed.

On the side of the volumetric element 15, the shell 22 has an internal expansion 60 in which axial recesses 61 are provided; said recesses are open toward the disk 45 and are angularly spaced. Respective compression springs 62 are accommodated in the recesses 61 and act against the disk 45, keeping it resting on the piston through the dowels 57.

The operation of the motor is as follows.

During normal operation, the motor is fed with pressurized oil through the ducts 12 and 59. Pressure suitable to rotate the balancer shaft 7, which transmits its motion to the output shaft 3, is created in the internal chambers of the volumetric element 15.

At the same time, the annular chamber 58 of the piston 55 is filled by the pressurized oil, so that the piston 55 is pushed against the disk 45 in contrast with the springs 62. In this manner, the disk 45 is spaced from the other disk 46, allowing release of the clutch and free rotation of the body 35 and of the rings 47, 48 associated therewith. When braking is required, the supply of pressurized oil is removed and the annular chamber 58 is connected to the discharge.

In this manner, since the hydraulic thrust of the piston 55 is no longer present, the springs 62 act on the disk 45 which clamps the rings 47, 48 against the surface 50, producing a braking action on the body 35.

The braking of the body 35 in turn causes that of the balancer shaft 7 and of the shaft 3.

A substantial advantage of the present invention is constituted by the fact that the described motor is brought to a locked condition if motor oil pressure is absent. This allows to provide a mechanical-action safety brake when the motor is installed as a propulsion element in vehicles, lifting devices and the like.

Another advantage is to be found in the compact structure of the motor, in which the braking element has a modest bulk which does not hinder the application of the motor.

A further advantage is constituted by the fact that the brake acts on the balancer shaft and the braking effect is thus multiplied with respect to brakes which act on the output shaft.

A further advantage of the invention is its applicability to currently existing hydraulic motors, since the brake constitutes an additional module which requires no modification of the motor.

Finally, a further advantage is provided by the channels 41, 42, 43, 51 through which the laminar leakage oil which exits from the volumetric element is recovered toward the duct 33, thus allowing to cool the clutch and to lubricate the moving parts.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A hydraulic motor with clutch brake of the type comprising: a casing (1) rotatably supporting an output shaft (3), a stator (16) axially associated with said casing at the opposite side with respect to said output shaft, a star-shaped rotor (18) rotatable in an orbital manner inside said stator, defining therewith chambers (19) of a volumetric element and having an axial through hole (20), a balancer shaft (7) for angular misalignment rotationally rigid to said output shaft and to said rotor traversing said axial through hole (20), distribution means (10) for conveying a pressurized work fluid into said chambers (19) for rotating said volumetric element and, through the balancer shaft, the output shaft, a brake shell (22) associated with said casing (1) and rotatably accommodating a traction body (35), at least one rotatable member (47,48) being rotationally rigid with said body, said rotatable member co-operating with at least one stationary member (45,46) slidingly supported by said shell (22) so as to define a clutch together with said rotatable member, said rotatable member (45,46) being biased, on one side, by hydraulic means (55,58,59) acting so to release the clutch and, on the opposite side, by spring means (62) acting so as to clamp said members onto one another and against a rotatively stationary abutment (50) when hydraulic pressure is absent, characterised in that the balancer shaft is coupled to a cavity (39) provided in the face of said traction body which is directed toward the volumetric element.

2. A hydraulic motor according to claim 1, characterized in that said shell (22) encloses a coaxial cavity (24) which is rearwardly closed by a cover (25) which is internally shaped so as to form an extension (26) in which holes (27) are provided for accommodating cylindrical dowels (28) which rotationally retain a cap (29) which is centered on said extension and has a coaxial seat (31) defining a central opening and accommodating a bearing (30) supporting the traction body (35).

3. A hydraulic motor according to claims 1 and 2, characterized in that said traction body (35) is supported by said bearing (30) on one side and has, on the other side, an outer surface (36) which constitutes a rolling track for a roller bearing (37).

4. A hydraulic motor according to claims 1 and 2, characterized in that said traction body (35) is cup-shaped and is externally provided with radially spaced axial grooves (44) engaging internal teeth of rings (47,48) interposed between a pair of disks (45,46) which are rotationally rigid with the shell and the planar front edge surface (50) of said cap (29).

5. A hydraulic motor according to claims 1, 2 and 4, characterized in that said disks (45,46) have peripheral recesses (49) engaging stud bolts (23) coupling said shell to said casing (1).

6. A hydraulic motor according to claim 1, characterized in that said balancer shaft (7) extends beyond the volumetric element (15) with an axial cylindrical pivot (21) inserted in a pad (40) which is slidable in an open cavity (39) of said traction body (35), said cavity having a diametrically elongated shape.

7. A hydraulic motor according to claim 1, characterized in that said hydraulic means comprises a piston (55) acting against said disks (45,46) through dowels (57) so as to deactivate the clutch and in that said spring means comprises a plurality of compression springs (62) which act on the disks (45,46) so as to activate the clutch.

8. A hydraulic motor according to claim 7, characterized in that said compression springs (62) are accommodated in seats (61) of said shell parallel to the axis of rotation (A) of the traction body (35).

9. A hydraulic motor according to claims 1, 2, 4 and 7, characterized in that said piston (55) has an annular head guided on said extension (26) of the cover (25) and a skirt embracing said cap (29) and acting against said disks (45,46) through said dowels (57), an annular chamfer being provided in said head and defining, with said cover, an annular chamber (58) which is connected to the work fluid supply.

10. A hydraulic motor according to claim 6, characterized in that said cavity (39) is connected to a discharge duct (33) centrally provided in the cover (25) through channels (41,42,43) adapted to convey the laminar leakage fluid from the volumetric element (15) through the moving parts of the clutch.

## Patentansprüche

1. Hydraulischer Motor mit Kupplungsbremse vom Typ, der aufweist: ein Gehäuse (1), das eine Ausgangswelle (3) drehbar lagert, einen Stator (16), der axial mit dem Gehäuse an der gegenüberliegenden Seite bezüglich der Ausgangswelle verbunden ist, einen sternförmigen Rotor (18), der auf umlaufende Art innerhalb des Stators drehbar ist, der damit Kammern (19) eines volumetrischen Elements begrenzt und ein axiales Durchgangsloch (20) hat, eine Ausgleichswelle (7) für winklige Fehlausrichtung, die drehbar starr mit der Ausgangswelle und dem Rotor ist und durch das axiale Durchgangsloch (20) läuft, eine Verteilereinrichtung (10) zum Zuführen eines unter Druck stehenden Arbeitsfluids in die Kammern (19) zum Drehen des volumetrischen Elements und, durch die Ausgleichswelle, der Ausgangswelle, einer Bremsschale (22), die mit dem Gehäuse (1) verbunden ist und den Zugkraftkörper (35) drehbar unterbringt, zumindest ein drehbares Teil (47,48), das drehbar starr mit dem Körper ist, wobei das drehbare Teil mit zumindest einem stationären Teil (45,46), das gleitbar von der Schale (22) gelagert wird, derart zusammenwirkt, daß eine Kupplung zusammen mit dem drehbaren Teil gebildet wird, wobei das drehbare Teil (45,46) auf einer Seite durch eine hydraulische Einrichtung (55,58,59), die derart wirkt, daß die Kupplung freigegeben wird, und auf der gegenüberliegenden Seite durch eine Federeinrichtung (62) vorgespannt ist, die derart wirkt, daß die Teile aufeinander und gegen ein drehmäßig stationäres Widerlager (50) festgeklemmt werden, wenn kein hydraulischer Druck vorliegt, dadurch gekennzeichnet, daß die Ausgleichswelle mit einem Hohlraum (39) gekoppelt ist, der in der Stirnseite des Zugkraftkörpers vorgesehen ist und in Richtung zu dem volumetrischen Element hinweist.

2. Hydraulischer Motor gemäß Anspruch 1, dadurch gekennzeichnet, daß die Schale (22) einen koaxialen Hohlraum (24) umschließt, der nach hinten hin durch eine Abdeckung (25) geschlossen ist, die innen derart geformt ist, daß eine Erweiterung (26) ausgebildet wird, in der Löcher (27) zum Unterbringen zylindrischer Paßstifte (28) vorgesehen sind, die drehmäßig eine Kappe (29) festhalten, die auf der Erweiterung zentriert ist und einen koaxialen Sitz (31) hat, der eine zentrale Öffnung begrenzt und ein Lager (30) unterbringt, das den Zugkraftkörper (35) lagert.

3. Hydraulischer Motor gemäß den Ansprüchen 1 und 2, dadurch gekennzeichnet, daß der Zugkraftkörper (35) durch das Lager (30) auf einer Seite gelagert ist und auf der anderen Seite eine Außenoberfläche (36) hat, die eine Rollbahn für ein Rollenlager (37) bildet.

4. Hydraulischer Motor gemäß den Ansprüchen 1 und 2, dadurch gekennzeichnet, daß der Zugkraftkörper (35) topfförmig ist und außen mit radial beabstandeten Axialrillen (44) versehen ist, die in innere Zähne des Rings (47,48) eingreifen, die zwischen einem Paar von Scheiben (45,46) angeordnet sind, die drehmäßig starr mit der Schale und der planaren Frontkanten-Oberfläche (50) der Kappe (29) sind.

5. Hydraulischer Motor gemäß den Ansprüchen 1, 2 und 4, dadurch gekennzeichnet, daß die Scheiben (45,46) periphere Aufnahmen (49) haben, die in Schraubbolzen (23) eingreifen, die die Schale mit dem Gehäuse (1) koppeln.

6. Hydraulischer Motor gemäß Anspruch 1, dadurch gekennzeichnet, daß sich die Ausgleichswelle (7) über das volumetrische Element (15) mit einem axialen zylindrischen Drehstift (21) hinaus erstreckt, der in ein Anpaßglied (40) eingesetzt ist, welches gleitbar in einem offenem Hohlraum (39) des Zugkraftkörpers (35) ist, wobei der Hohlraum eine diametral gestreckte Form hat.

7. Hydraulischer Motor gemäß Anspruch 1, dadurch gekennzeichnet, daß die hydraulische Einrichtung einen Kolben (55) aufweist, der gegen die Scheiben (45,46) durch Paßstifte (57) derart wirkt, daß die Kupplung deaktiviert wird, und daß die Federeinrichtung eine Vielzahl von Kompressionsfedern (62) aufweist, die auf die Scheiben (45,46) derart einwirken, daß die Kupplung aktiviert wird.

8. Hydraulischer Motor gemäß Anspruch 7, dadurch gekennzeichnet, daß die Kompressionsfedern (62) in Sitzen (61) der Schale parallel zu der Achse der Drehung (A) des Zugkraftkörpers (35) untergebracht sind.

9. Hydraulischer Motor gemäß den Ansprüchen 1, 2, 4 und 7 dadurch gekennzeichnet, daß der Kolben (55) einen ringförmigen Kopf, der an der Erweiterung (26) der Abdeckung (25) geführt ist, und einen Rand hat, der die Kappe (29) umfaßt und gegen die Scheiben (45,46) durch die Paßstifte (57) wirkt, wobei eine ringförmige Abschrägung in dem Kopf vorgesehen ist und mit der Abdeckung eine ringförmige Kammer (58) begrenzt, die mit der Arbeitsfluid-Versorgung verbunden ist.

10. Hydraulischer Motor gemäß Anspruch 6, dadurch gekennzeichnet, daß der Hohlraum (39) mit dem Entladekanal (33), der zentral in der Abdeckung (25) vorgesehen ist, durch Kanäle (41,42,43) verbunden ist, die dafür ausgelegt sind, das laminare Leckfluid von dem volumetrischen Element (15) durch die beweglichen Teile der Kupplung zu leiten.

## Revendications

1. Moteur hydraulique avec frein d'embrayage, du type comprenant : un boîtier (1) supportant en rotation un arbre de sortie (3), un stator (16) associé dans le sens axial au dit boîtier sur le côté opposé au dit arbre de sortie, un rotor en forme d'étoile (18) pouvant tourner d'une manière orbitale à l'intérieur du dit stator, définissant ainsi des chambres (19) d'un élément volumétrique et ayant un trou traversant axial (20), un arbre d'équilibrage (7) d'écart angulaire solidaire en rotation avec ledit arbre de sortie et ledit rotor traversant ledit trou traversant axial (20), des moyens de distribution (10) destinés à amener un fluide de travail pressurisé dans lesdites chambres (19) pour faire tourner ledit élément volumétrique et, par l'intermédiaire de l'arbre d'équilibrage, l'arbre de sortie, un carter de frein (22) associé au dit boîtier (1) et recevant en rotation un corps de traction (35), au moins un élément rotatif (47,48) solidaire en rotation avec ledit corps, ledit élément rotatif coopérant avec au moins un élément stationnaire (45,46) supporté à glissement par ledit carter (22) de manière à définir un embrayage avec ledit élément rotatif, ledit élément rotatif (45,46) étant commandé sur un côté par des moyens hydrauliques (55,58,59) agissant de manière à relâcher l'embrayage et, du côté opposé, par des moyens à ressorts (62) agissant de manière à serrer lesdits éléments l'un sur l'autre et contre une butée stationnaire rotative (50) en l'absence de pression hydraulique, caractérisé en ce que l'arbre d'équilibrage est accouplé à une cavité (39) prévue à la surface du dit corps de traction et tournée vers l'élément volumétrique.

2. Moteur hydraulique selon la revendication 1, caractérisé en ce que ledit carter (22) renferme une cavité coaxiale fermée vers l'arrière par une chape (25), laquelle présente une forme intérieure constituant une extension (26) dans laquelle des orifices (27) sont prévus pour recevoir des chevilles cylindriques (28) qui immobilisent en rotation un couvercle (29) centré sur ladite extension et ayant un siège coaxial (31) définissant une ouverture centrale et recevant un palier (30) qui porte le corps de traction (35).

3. Moteur hydraulique selon la revendication 1 ou 2, caractérisé en ce que ledit corps de traction (35) est porté par ledit palier (30) d'un côté et possède de l'autre côté une surface extérieure (36) constituant une piste de roulement pour un palier à rouleaux (37).

4. Moteur hydraulique selon la revendication 1 ou 2, caractérisé en ce que ledit corps de traction (35) présente la forme d'une coupelle et est muni à l'extérieur de gorges axiales (44) espacées dans le sens radial, recevant les dentelures internes d'anneaux (47,48) intercalés entre une paire de disques (45,46), lesquels sont solidaires en rotation avec le dit carter et la surface plane (50) du bord frontal du dit couvercle (29).

5. Moteur hydraulique selon les revendications 1, 2 et 4, caractérisé en ce que lesdits disques (45,46) ont des renfoncements périphériques (49) recevant des goujons filetés (23) accouplant ledit carter au dit boîtier (1).

6. Moteur hydraulique selon la revendication 1, caractérisé en ce que ledit arbre d'équilibrage (7) s'étend au-delà de l'élément volumétrique (15) avec un pivot cylindrique axial (21) inséré dans un patin (40) qui peut glisser dans une cavité ouverte (39) du dit corps de traction (35), ladite cavité ayant une forme diamétralement allongée.

7. Moteur hydraulique selon la revendication 1, caractérisé en ce que lesdits moyens hydrauliques comprennent un piston (55) agissant contre lesdits disques (45,46) par l'intermédiaire de chevilles (57) pour désactiver l'embrayage, lesdits moyens à ressorts comprenant plusieurs ressorts (62) agissant en compression sur les disques (45,46) pour activer l'embrayage.

8. Moteur hydraulique selon la revendication 7, caractérisé en ce que lesdits ressorts agissant en compression (62) sont logés dans des sièges (61) du dit carter parallèles à l'axe de rotation (A) du corps de traction (35).

9. Moteur hydraulique selon les revendications 1, 2, 4 et 7, caractérisé en ce que ledit piston (55) a une tête annulaire guidée sur ladite extension (26) de la chape (25) et une jupe entourant le couvercle (29) et agissant contre lesdits disques (45,46) par l'intermédiaire des dites chevilles (57), un chanfrein annulaire étant prévu dans ladite tête et définissant avec ladite chape une chambre annulaire (58) qui est reliée à l'alimentation en fluide de travail.

10. Moteur hydraulique selon la revendication 6, caractérisé en ce que ladite cavité (39) est reliée à un conduit d'évacuation (33) prévu en position centrale dans la chape (25) par l'intermédiaire de canaux (41,42,43) destinés à amener le fluide de fuite laminaire depuis l'élément volumétrique (15) par l'intermédiaire des parties mobiles de l'embrayage.
